# EUROPÄISCHE PATENTSCHRIFT

(11) **EP 0 897 956 B1**
(45) Veröffentlichungstag und Bekanntmachung des Hinweises auf die Patenterteilung: **27.02.2002**
(21) Anmeldenummer: 98114991.7
(22) Anmeldetag: 10.08.1998
(51) Int. Cl.: C09B 67/08, C09D 11/00

(54) **Pigmentzubereitungen in Granulatform auf Basis von mit Harzgemischen belegten organischen Pigmenten**
Pigment compositions in granulate form based on pigments coated with resin mixtures
Compositions pigmentaires sous forme de granulés à base de pigments enrobés par des mélanges de résines

(30) Priorität: 16.08.1997 DE 19735487
(43) Veröffentlichungstag der Anmeldung: 24.02.1999
(73) Patentinhaber: BASF AKTIENGESELLSCHAFT, 67056 Ludwigshafen (DE)
(72) Erfinder: Reisacher, Hansulrich, Dr., 67133 Maxdorf (DE)

(56) Entgegenhaltungen:
- EP-A- 0 050 313
- EP-A- 0 665 272
- EP-A- 0 770 648
- EP-A- 0 796 900
- DE-A- 3 327 562
- FR-A- 1 576 477

## Beschreibung

Die vorliegende Erfindung betrifft neue Pigmentzubereitungen in Granulatform, bei denen die organischen Pigmentteilchen mit einem Gemisch eines Harzes (A) mit einer Säurezahl ≥ 200 und eines Harzes (B) mit einer Säurezahl < 200 belegt sind.

Weiterhin betrifft die Erfindung die Herstellung dieser Pigmente und ihre Verwendung zum Pigmentieren von Druckfarben.

Bekanntermaßen fallen organische Pigmente bei der Synthese in einer Form an, welche bei direkter Einarbeitung in Bindemittelsysteme für Druckfarben oder Lacke zu schlechten rheologischen Eigenschaften und nichtzufriedenstellender Koloristik der pigmentierten Systeme führt. Daher wird durch eine zusätzliche Behandlung der Pigmente, z.B. durch eine Belegung mit Harz, versucht, deren anwendungstechnische Eigenschaften zu verbessern.

Die Belegung mit dem Harz erfolgt dabei häufig in der Weise, daß das Harz in Form einer wäßrigen Alkaliresinatlösung zu einer neutralen oder alkalischen wäßrigen Pigmentsuspension gegeben und anschließend durch Ansäuern als Harzsäure auf die Pigmentteilchen aufgefällt wird, wobei durch Zugabe von gelösten Metallsalzen die Harzsäure auch teilweise zur Harzseife umgewandelt wird. Die Pigmente werden dann üblicherweise durch Filtrieren und Trocknen als Pulver isoliert.

Die harzbelegten Pigmente, die bis zu 50 Gew.-% und mehr Harz enthalten, weisen vorteilhafte koloristische Eigenschaften, wie hohen Glanz, hohe Lasur und trotz des Harzgehaltes eine den harzfreien Pigmenten vergleichbare Farbstärke, sowie günstige rheologische Eigenschaften auf und werden insbesondere bei der Herstellung von Druckfarben, insbesondere von Buch- und Offsetdruckfarben, verwendet.

Pigmentgranulate zeichnen sich bei der Anwendung gegenüber pulverförmigen Pigmentpräparationen durch eine deutlich verringerte Staubbelästigung und ihre Rieselfähigkeit aus und gewinnen daher zunehmendes Interesse. Sie werden vorteilhaft hergestellt, indem das Pigment, gewünschtenfalls nach Vorbehandlung, als wasserfeuchter Filterkuchen isoliert wird, der anschließend durch eine Lochplatte gedrückt wird. Die folgende Trocknung kann z.B. kontinuierlich auf einem Bandtrockner erfolgen. Auf diese Weise werden Stranggranulate erhalten, die üblicherweise, 0,3-0,8 cm dick und 0,5-2 cm lang sind.

Die Granulierung bereitet jedoch bei Pigmenten mit hohem Harzanteil Probleme, da der Filterkuchen meist nicht mehr die erforderliche Plastizität besitzt.

In der EP-A-50 313 wird ein sog. Flushprozeß verwendet, um ein Pigmentgranulat herzustellen, das mit einem Harz mit einer Säurezahl im Bereich von 145 bis 165 oder einem Gemisch derartiger Harze belegt ist. Die Granulierung erfolgt dabei in der wäßrigen Suspension unter Einleiten von Wasserdampf.

Der Erfindung lag daher die Aufgabe zugrunde, weitere Pigmentzubereitungen mit vorteilhaften Anwendungseigenschaften bereitzustellen.

Demgemäß wurden die Pigmentzubereitungen in Granulatform, bei denen die organischen Pigmentteilchen mit einem Gemisch eines Harzes (A) mit einer Säurezahl ≥ 200 und eines Harzes (B) mit einer Säurezahl < 200 belegt sind, gefunden.

Außerdem wurde ein Verfahren zur Herstellung dieser Pigmentzubereitungen gefunden, welches dadurch gekennzeichnet ist, daß man die in wäßrigem Medium suspendierten Pigmentteilchen mit dem Harzgemisch belegt, das harzbelegte Pigment auf einem Filtrationsaggregat isoliert, den feuchten Filterkuchen über eine Lochplatte granuliert und das Granulat trocknet.

Nicht zuletzt wurde die Verwendung dieser Pigmentzubereitungen zur Pigmentierung von Druckfarben gefunden.

Wesentlich für die erfindungsgemäßen Pigmentgranulate ist, daß die organischen Pigmentteilchen mit einem Gemisch eines Harzes (A) mit einer Säurezahl ≥ 200 und eines Harzes (B) mit einer Säurezahl < 200 belegt sind.

Bevorzugt beträgt die Säurezahl des Harzes (A) 240 bis 320 und besonders bevorzugt 280 bis 320. Die Säurezahl des Harzes (B) liegt bevorzugt im Bereich von 100 bis < 200, insbesondere von 140 bis 195.

Überraschenderweise eignen sich mit dem erfindungsgemäßen Harzgemisch belegte organische Pigmente hervorragend zur Granulatherstellung.

In der Regel enthält dieses Harzgemisch 1 bis 80 Gew.-%, vorzugsweise 1 bis 50 Gew.-%, des Harzes (A) und 20 bis 99 Gew.-%, vorzugsweise 50 bis 99 Gew.-%, des Harzes (B).

Prinzipiell sind für das erfindungsgemäße Harzgemisch alle natürlichen, halbsynthetischen und vollsynthetischen Harze geeignet, deren Säurezahl in den angegebenen Bereichen liegen, wobei auch im Fall der Harze (B) "saure" Harze, also carboxylgruppenhaltige Harze, vorzuziehen sind.

Beispiele für besonders geeignete Harze sind dabei Acrylat- und Polyesterharze und vor allem Kolophoniumharze wie Kolophonium selbst und seine allgemein bekannten Derivate, z.B. dimerisiertes, polymerisiertes, hydriertes und disproportioniertes Kolophonium und die üblicherweise Säurezahlen ≥ 200 aufweisenden Umsetzungsprodukte mit Malein- und Fumarsäure.

Der Harzanteil beträgt bei den erfindungsgemäßen Pigmentzubereitungen in der Regel 20 bis 55 Gew.-%, bevorzugt 30 bis 50 Gew.-%.

Je höher der Harzanteil ist, desto größer sollte der Gehalt an Harz (A) sein.

Als Pigment kommen alle organischen Pigmente in feinteiliger Form in Betracht. Geeignete Pigmentklassen sind beispielsweise Monoazo-, Disazo-, Anthrachinon-, Anthrapyrimidin-, Chinacridon-, Chinophthalon-, Diketopyrrolopyrrol-, Dioxazin-, Flavanthron-, Indanthron-, Isoindolin-, Isoviolanthron-, Perinon-, Perylen-, Phthalocyanin-, Pyranthron- und Thioindigopigmente sowie deren Mischungen.

Von besonderem Interesse sind nichtverlackte Azopigmente, wobei β-Naphthol- und Naphthol-AS-Pigmente als Monoazopigmente und Bisacetessigsäurearylid-, Disazopyrazolon- und insbesondere Diarylgelbpigmente als Disazopigmente aufgeführt sein sollen.

Beispielhaft seien folgende Pigmente aus den einzelnen Klassen genannt:
- Monoazopigmente: C.I. Pigment Brown 25;
   C.I. Pigment Orange 1, 5, 36 und 67;
   C.I. Pigment Red 1, 2, 3, 112, 146, 170 und 184;
   C.I. Pigment Yellow 1, 2, 3, 73, 74, 65 und 97;
- Disazopigmente: C.I. Pigmente Orange 16 und 34;
   C.I. Pigment Red 144 und 166;
   C.I. Pigment Yellow 12, 13, 14, 17, 83,
   106, 113, 114, 126, 127, 174, 176 und
   188;
- Anthrachinonpigmente: C.I. Pigment Yellow 147;
   C.I. Pigment Violet 31;
- Anthrapyrimidinpigmente: C.I. Pigment Yellow 108;
- Chinacridonpigmente: C.I. Pigment Red 122 und 202;
   C.I. Pigment Violet 19;
- Chinophthalonpigmente: C.I. Pigment Yellow 138;
- Dioxazinpigmente: C.I. Pigment Violet 23 und 37;
- Flavanthronpigmente: C.I. Pigment Yellow 24;
- Indanthronpigmente: C.I. Pigment Blue 60 und 64;
- Isoindolinpigmente: C.I. Pigment Orange 69;
   C.I. Pigment Red 260;
   C.I. Pigment Yellow 139 und 185;
- Isoindolinonpigmente: C.I. Pigment Yellow 109, 110 und 173;
- Perinonpigmente: C.I. Pigment Orange 43;
   C.I. Pigment Red 194;
- Perylenpigmente: C.I. Pigment Black 31 und 32;
   C.I. Pigment Red 123, 149, 178, 179, 190 und 224;
   C.I. Pigment Violet 29;
- Phthalocyaninpigmente: C.I. Pigment Blue 15, 15:1, 15:2,
   15:3, 15:4, 15:6 und 16;
   C.I. Pigment Green 7 und 36;
- Pyranthronpigmente: C.I. Pigment Orange 51;
   C.I. Pigment Red 216;
- Thioindigopigmente: C.I. Pigment Red 88;
- C.I. Pigment Black 1 (Anilinschwarz);
- C.I. Pigment Yellow 101 (Aldazingelb).

Selbstverständlich können die erfindungsgemäßen Pigmentzubereitungen auch weitere für das jeweilige Pigment übliche Zusatzstoffe enthalten. Im Fall der Azopigmente sei beispielsweise auf bekannte Kupplungshilfsmittel wie oberflächenaktive Additive, langkettige Fettsäuren und Amine und kristallisationshemmende Zusätze wie das Kupplungsprodukt aus bisdiazotierter 4,4'-Diaminodiphenyl-2,2'-disulfonsäure und Acetessigsäure-m-xylidid (EP-A-263 951) verwiesen. Diese Hilfsmittel können in bis zu 15 Gew.-% in den Pigmentzubereitungen enthalten sein.

Die erfindungsgemäßen Pigmentgranulate können vorteilhaft nach dem ebenfalls erfindungsgemäßen Herstellungsverfahren erhalten werden, indem man die in vorzugsweise alkalisch-wäßrigem Medium suspendierten Pigmentteilchen mit dem Gemisch von Harz (A) und Harz (B) belegt, das harzbelegte Pigment anschließend auf einem Filtrieraggregat isoliert, den feuchten Filterkuchen über eine Lochplatte granuliert und das Granulat trocknet.

Verfahrenstechnisch geht man bei dem erfindungsgemäßen Verfahren zweckmäßigerweise wie folgt vor:

Man stellt die wäßrige Pigmentsuspension (die z.B. im Fall der Azopigmente vorteilhaft der bei der Pigmentsynthese anfallenden Suspension entsprechen kann) zunächst alkalisch, d.h. in der Regel auf einen pH-Wert von 8 bis 13, vorzugsweise 9 bis 12, und gibt dann alkalisch-wäßrige Lösungen der Harze (A) und (B) (Alkaliresinatlösungen) gleichzeitig oder nacheinander zu. Der pH-Wert der Suspension liegt nach der Harzzugabe üblicherweise bei 9 bis 12.

Dann erhitzt man die Suspension auf etwa 90 bis 100°C. Diese Hitzebehandlung dauert im allgemeinen 15 bis 60 min.

Man kann jedoch auch zuerst die alkalisch gestellte Pigmentsuspension erhitzen und dann die Harzlösungen zugeben und die weitere Hitzebehandlung vornehmen. Eine weitere Variante kann bei den Azopigmenten darin bestehen, daß man die Harze bereits bei der Pigmentsynthese (Kupplung) zusetzt.

Anschließend stellt man den pH-Wert der Suspension durch Zugabe einer Säure, bevorzugt verdünnter Salzsäure, auf üblicherweise 3 bis 8, bevorzugt 4,5 bis 7, ein.

Gewünschtenfalls nach weiterem kurzen Erhitzen oder Nachrühren filtriert man das harzbelegte Pigment ab, granuliert den feuchten Filterkuchen und trocknet das Granulat.

Die erfindungsgemäßen Pigmentzubereitungen in Granulatform eignen sich vorteilhaft zur Pigmentierung von Druckfarben, insbesondere auch Buch- und Offsetdruckfarben, zeichnen sich dabei durch vorteilhafte Anwendungseigenschaften, insbesondere guten Glanz, hohe Farbstärke, gute Viskosität und leichte Dispergierbarkeit im Anwendungsmedium aus.

### Beispiele

### Herstellung und Prüfung erfindungsgemäßer Pigmentzubereitungen

a) Zunächst wurden folgende Azopigmente hergestellt:
   C.I. Pigment Yellow 13:
      Zur Herstellung der Tetrazokomponente wurde eine Suspension von 28 g 3,3'-Dichlor-4,4'-diaminodiphenyl (3,3'-Dichlorbenzidin) in 600 ml 1 n Salzsäure bei 0°C mit 15,3 g Natriumnitrit versetzt. Überschüssige salpetrige Säure wurde anschließend mit Amidosulfonsäure entfernt, dann wurde die Lösung filtriert.
      Zur Herstellung der Kupplungskomponente wurden 47,6 g Acetessigsäure-2,4-dimethylanilid in 305 ml 1,5 n Natronlauge gelöst.
      Im Kupplungsgefäß wurden 310 ml 0,5 n Essigsäure vorgelegt. Dann wurde so viel Kupplungskomponente zugegeben, bis ein pH-Wert von 5,0 erreicht war. Danach wurden die Tetrazokomponente und die restliche Kupplungskomponente gleichzeitig zugegeben, wobei der pH-Wert bei 4,5 und die Temperatur bei 20°C gehalten wurde.
      Nach beendeter Kupplung wurde durch Zugabe von 17 ml 25 gew.-%iger Natronlauge ein pH-Wert von 11 eingestellt, dann wurde eine Tetrazokomponente, die durch Tetrazotierung von 1,2 g 4,4'-Diamidodiphenyl-2,2'-disulfonsäure in 16 ml 1 n Salzsäure bei 0°C mit 0,5 g Natriumnitrit hergestellt wurde, zugegeben.
   C.I. Pigment Yellow 12:
      Die Herstellung der Pigmentsuspension erfolgte analog zu C.I. Pigment Yellow 13 durch Kupplung von 28 g tetrazotiertem 3,3'-Dichlorbenzidin mit 41,1 g Acetessigsäureanilid.
   C.I. Pigment Yellow 14:
      Die Herstellung der Pigmentsuspension erfolgte analog zu C.I. Pigment Yellow 13 durch Kupplung von 28 g tetrazotiertem 3,3'-Dichlorbenzidin mit 44,3 g Acetessigsäure-2-methylanilid.
   C.I. Pigment Yellow 174:
      Die Herstellung der Pigmentsuspension erfolgte analog zu C.I. Pigment Yellow 13 durch Kupplung von 28 g tetrazotiertem 3,3'-Dichlorbenzidin mit 23,8 g Acetessigsäure-2,4-dimethylanilid und 22,2 g Acetessigsäure-2-methylanilid.
b) Zur anschließenden Belegung der Pigmentteilchen mit Harz wurden in allen Fällen nach vollständiger Umsetzung des Tetrazoniumsalzes eine Lösung von x g fumarsäuremodifiziertem Kolophoniumharz (Colophane® 25F, Fa. Willers, Engel & Co.; Säurezahl 310) als Harz (A) in x₁ ml 0,3 n Natronlauge und eine Lösung von y g teilhydriertem Kolophoniumharz (Staybelite® E-Resin, Fa. Hercules; Säurezahl 165) als Harz (B) in y₁ ml 0,3 n Natronlauge unter Rühren zu der Pigmentsuspension gegeben.
   Nach 30 minütigem Erhitzen auf 95°C wurde der pH-Wert der Suspension durch Zugabe von 1 n Salzsäure auf 5 eingestellt.
   Nach 15 minütigem Nachrühren bei 95°C und Abkühlen auf 60°C wurde das harzbelegte Pigment abfiltriert. Der Filterkuchen wurde mit einer Handpresse durch eine Lochplatte (Lochdurchmesser 0,4 cm) gedrückt, was in allen Beispielen problemlos möglich war. Das Granulat wurde dann bei 60°C getrocknet.
c) Zur Bestimmung der Farbstärke der harzbelegten Pigmente wurden Druckfarben hergestellt, indem jeweils 7,5 g des harzbelegten Pigments in 42,5 g eines Firnis aus 40 Gew.-% kolophoniummodifiziertem Phenolharz, 27 Gew.-% Lackleinöl und 33 Gew.-% Mineralöl PKWF 6/9 (Fa. Haltermann) eingerührt und dann mit einem Dispermat-Dissolver (Zahnscheibendurchmesser 0,3 cm, 12000 U/(min) 10 min bei 50°C dispergiert wurden. Anschließend wurde die vordispergierte Paste auf einem Drei-Walzenstuhl SDY 200 (Fa. Bühler) dreimal bei 10 bar Anpreßdruck der Walzen angerieben.

Die Bestimmung der Farbstärke (Angabe als Färbeäquivalente FAE) erfolgte über die Weißaufhellung der Druckfarbe mit einer Weißpaste. Dazu wurden 0,5 g Druckfarbe mit 10 g einer 40 gew.%-ig pigmentierten Weißpaste auf einem Tellerreiber JEL 25/53 (Fa. Engelsmann) durch 4 x 35 Umdrehungen gemischt.

Den analogen Präparation mit den jeweils nur mit dem Harz (B) belegten, schlecht granulierbaren Pigmenten V1 bis V7 wurde dabei der FAE-Wert 100 (Standard) zugeordnet. FAE-Werte < 100 bedeuten eine höhere Farbstärke als beim Standard, FAE-Werte > 100 entsprechend eine kleinere Farbstärke.

Weitere Einzelheiten zu diesen Versuchen sowie deren Ergebnisse sind in der folgenden Tabelle aufgeführt.

**Tabelle**

| Bsp. | Pigment | Anteil Harzgemisch [Gew.-%] | x g Harz (A) | x₁ ml NaOH | y g Harz (B) | y₁ ml NaOH | FAE |
|---|---|---|---|---|---|---|---|
| 1 | P.Y.13 | 40 | 12,6 | 160 | 37,8 | 490 | 100 |
| 2 | P.Y.13 | 40 | 25,2 | 325 | 25,2 | 325 | 104 |
| 3 | P.Y.13 | 40 | 37,8 | 490 | 12,6 | 160 | 110 |
| V1 | P.Y.13 | 40 | - | - | 50,4 | 650 | 100 |
| 4 | P.Y.13 | 45 | 31,0 | 380 | 31,0 | 380 | 105 |
| V2 | P.Y.13 | 45 | - | - | 62,0 | 760 | 100 |
| 5 | P.Y.12 | 40 | 11,6 | 150 | 34,8 | 450 | 101 |
| 6 | P.Y.12 | 40 | 23,2 | 300 | 23,2 | 300 | 102 |
| V3 | P.Y.12 | 40 | - | - | 46,4 | 600 | 100 |
| 7 | P.Y.14 | 40 | 12,1 | 155 | 36,3 | 465 | 100 |
| 8 | P.Y.14 | 40 | 24,2 | 310 | 24,2 | 310 | 102 |
| V4 | P.Y.14 | 40 | - | - | 48,4 | 620 | 100 |
| 9 | P.Y.174 | 40 | 12,2 | 158 | 37,0 | 472 | 101 |
| 10 | P.Y.174 | 40 | 24,6 | 315 | 24,6 | 315 | 102 |
| V5 | P.Y.174 | 40 | - | - | 49,2 | 630 | 100 |
| 11 | P.Y.174 | 45 | 15,1 | 195 | 45,3 | 585 | 100 |
| 12 | P.Y.174 | 45 | 30,2 | 390 | 30,2 | 390 | 101 |
| V6 | P.Y.174 | 45 | - | - | 60,4 | 780 | 100 |
| 13 | P.Y.174 | 50 | 18,5 | 237 | 55,5 | 713 | 100 |
| 14 | P.Y.174 | 50 | 37,0 | 475 | 37,0 | 475 | 102 |
| V7 | P.Y.174 | 50 | - | - | 74,0 | 950 | 100 |

## Patentansprüche

1. Pigmentzubereitungen in Granulatform, bei denen die organischen Pigmentteilchen mit einem Gemisch eines Harzes (A) mit einer Säurezahl ≥ 200 und eines Harzes (B) mit einer Säurezahl < 200 belegt sind.

2. Pigmentzubereitungen nach Anspruch 1, bei denen das Harzgemisch 1 bis 80 Gew.-% des Harzes (A) und 20 bis 99 Gew.-% des Harzes (B) enthält.

3. Pigmentzubereitungen nach Anspruch 1 oder 2, die Harze auf der Basis von Kolophonium enthalten.

4. Pigmentzubereitungen nach den Ansprüchen 1 bis 3, die 20 bis 55 Gew.-% des Harzgemisches enthalten.

5. Pigmentzubereitungen nach den Ansprüchen 1 bis 4, die als organisches Pigment ein nichtverlacktes Azopigment enthalten.

6. Verfahren zur Herstellung von Pigmentzubereitungen gemäß den Ansprüchen 1 bis 5, **dadurch gekennzeichnet, daß** man die in wäßrigem Medium suspendierten Pigmentteilchen mit dem Harzgemisch belegt, das harzbelegte Pigment auf einem Filtrationsaggregat isoliert, den feuchten Filterkuchen über eine Lochplatte granuliert und das Granulat trocknet.

7. Verfahren nach Anspruch 6, **dadurch gekennzeichnet, daß** man die Pigmentteilchen mit dem Harzgemisch belegt, indem man die Pigmentteilchen und die gelösten Harze in alkalisch wäßrigem Medium gemeinsam erhitzt und die Harze anschließend durch Zugabe einer anorganischen oder organischen säure auf die Pigmentteilchen auffällt.

8. Verfahren nach Anspruch 7, **dadurch gekennzeichnet, daß** man den pH-Wert des alkalisch-wäßrigen Mediums auf ≥ 8 einstellt.

9. Verwendung von Pigmentzubereitungen gemäß den Ansprüchen 1 bis 5 zur Pigmentierung von Druckfarben.

## Claims

1. A pigment preparation in pellet form, wherein the organic pigment particles are coated with a mixture of a resin (A) having an acid number ≥ 200 and a resin (B) having an acid number < 200.

2. A pigment preparation as claimed in claim 1, wherein the resin mixture comprises from 1 to 80% by weight of said resin (A) and from 20 to 99% by weight of said resin (B).

3. A pigment preparation as claimed in claim 1 or 2, comprising resins based on rosin.

4. A pigment preparation as claimed in any of claims 1 to 3, comprising from 20 to 55% by weight of said resin mixture.

5. A pigment preparation as claimed in any of claims 1 to 4, comprising an unlaked azo pigment as organic pigment.

6. A process for producing a pigment preparation as claimed in any of claims 1 to 5, which comprises coating the pigment particles, suspended in an aqueous medium, with said resin mixture, collecting the resin-coated pigment on a filter means, pelletizing the moist filter cake via a pelletizing die and drying the pellets.

7. A process as claimed in claim 6, wherein the pigment particles are coated with said resin mixture by directly heating the pigment particles and the dissolved resins in an alkaline aqueous medium and then precipitating the resins onto the pigment particles by addition of an inorganic or organic acid.

8. A process as claimed in claim 7, wherein the pH of the alkaline aqueous medium is adjusted to ≥ 8.

9. The use of a pigment preparation as claimed in any of claims 1 to 5 for pigmenting printing inks.

## Revendications

1. Préparations de pigments sous forme de granulés, **caractérisées en ce que** les particules organiques de pigment sont recouvertes d'un mélange d'une résine (A) ayant un indice d'acide ≥200 et d'une résine (B) ayant un indice d'acide <200.

2. Préparations de pigments selon la revendication 1, **caractérisées en ce que** le mélange de résines contient de 1% à 80% en poids de résine (A) et de 20% à 99% en poids de résine (B).

3. Préparations de pigments selon la revendication 1 ou 2, contenant des résines à base de colophane.

4. Préparations de pigments selon les revendications 1 à 3, contenant de 20% à 55% en poids de mélange de résines.

5. Préparations de pigments selon les revendications 1 à 4, contenant en tant que pigment organique un pigment azoïque non soumis à une formation de laque de pigment.

6. Procédé de fabrication des préparations de pigments selon les revendications 1 à 5, **caractérisé en ce que** l'on recouvre du mélange de résines, les particules de pigment en suspension dans un milieu aqueux, que l'on sépare le pigment recouvert de résine à l'aide d'un dispositif de filtration, que l'on granule le gâteau de filtre à l'aide d'un plateau perforé et que l'on fait sécher le granulat.

7. Procédé selon la revendication 6, **caractérisé en ce que** l'on recouvre les particules de pigment avec le mélange de résines, en chauffant conjointement, dans un milieu alcalin aqueux, les particules de pigment et les résines dissoutes, et en précipitant ensuite les résines sur les particules de pigment au moyen d'un ajout d'acide organique ou inorganique.

8. Procédé selon la revendication 7, **caractérisé en ce que** l'on met ajuste le pH du milieu basique aqueux à une valeur égale ou supérieure à 8.

9. Mise en oeuvre de préparations de pigments selon les revendications 1 à 5 pour la pigmentation d'encres d'imprimerie.
